Europäisches Patentamt

European Patent Office

Office européen des brevets

(19)

(11) Veröffentlichungsnummer: **0 373 566**
**A2**

(12) # EUROPÄISCHE PATENTANMELDUNG

(21) Anmeldenummer: **89122849.6**

(51) Int. Cl.⁵: **B60D 1/32**

(22) Anmeldetag: **11.12.89**

(30) Priorität: **14.12.88 DE 8815526 U**

(43) Veröffentlichungstag der Anmeldung:
**20.06.90 Patentblatt 90/25**

(84) Benannte Vertragsstaaten:
**DE ES FR GB IT NL SE**

(71) Anmelder: **AL-KO KOBER AG**
**Ichenhauser Strasse 14**
**D-8871 Kötz 2(DE)**

(72) Erfinder: **Wöhrle, Rudolf**
**Kirchstrasse 2**
**D-8873 Ichenhausen-Rieden(DE)**
Erfinder: **Köhler, Robert**
**Christoph-von-Schmid-Strasse 3**
**D-8873 Ichenhausen(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Kugelkopf-Anhängerkupplung.**

(57) Die Erfindung betrifft eine Kugelkopf-Anhänger-kupplung (1) für Fahrzeuganhänger, die mit einer Reibbremse (8) ausgestattet ist. Die Reibbremse (8) dient zur Dämpfung von Schlingerbewegungen um den Kugelkopf (2) und besteht aus vier Reibelemen-ten (8,9,17), von denen mindestens drei als federbe-lastete Reibstößel (11,17) ausgebildet sind. Zwei Reibstößel (17) sind quer zur Fahrtrichtung (31) an-geordnet und werden durch eine federbelastete Be-tätigungsvorrichtung gegen den Kugelkopf (2) ge-preßt. Zwei Reibelemente (9,10) sind in Fahrtrich-tung (31) angeordnet, von denen eines oder beide als Reibstößel (11) mit einer Andruckfeder (14) aus-gebildet sind. In der Ausbildung als Reibstößel (11) ist das vordere Reibelement (9) in horizontaler Lage angeordnet sowie im Kupplungsgehäuse (3) längs-beweglich geführt und dient als Einrastanzeige für die Kugelkopf-Anhängerkupplung (1).

Fig. 1

## Kugelkopf-Anhängerkupplung

Die Erfindung betrifft eine Kugelkopf-Anhängerkupplung für Fahrzeuganhänger mit den Merkmalen im Oberbegriff des Hauptanspruches.

Eine derartige Anhängerkupplung ist aus der EP 171 586 bekannt. Bei dieser weist die Reibbremse zwei seitliche Reibstößel auf, die unter Federspannung an die Kupplungskugel angepreßt werden. Ferner sind die Kupplungskalotte im vorderen Bereich des Kupplungsgehäuses und die Kupplungsschale mit einem Reibbelag ausgekleidet. Die Kupplungsschale wird über die Kupplungsmechanik an den Kugelkopf angelegt und mittels einer Ziehkeil-Spanneinrichtung angepreßt.

Die vorbekannte Anordnung hat den Nachteil, daß zum Betätigen der Reibbremse hinsichtlich der beiden in Fahrtrichtung liegenden Reibelemente ein hoher Bedienungsaufwand erforderlich ist und daß die Reibbremse sich nicht genau und feinfühlig genug auf die gewünschten Reibwerte einstellen läßt.

Aus dem DE-GM 1 888 887 ist eine Kugelkopf-Anhängerkupplung mit einer Reibbremse bekannt, die ein oder zwei federbelastete Reibstößel aufweist. Die Reibstößel sind als einfache Bolzen oder Ringe mit einer ortsfest abgestützten Andruckfeder ausgebildet. Zusätzliche Reibelemente, insbesondere in Verbindung mit der Kupplungsschale, sind nicht vorhanden. Die Anpreßkräfte der Reibstößel lassen sich unter Berücksichtigung der Funktion beim An- und Abkuppeln nicht exakt und nicht in der gewünschten Höhe einstellen.

Die US-PS 2 998 268 lehrt eine Kugelkopf-Anhängerkupplung mit Bremsbelägen, die durch Schrauben an den Kugelkopf angepreßt werden. Diese Reibbremse läßt sich ebenfalls nicht exakt einstellen.

Aus der DD-PS 259 603 ist eine Kugelkopf-Anhängerkupplung mit einer sensorgesteuerten Reibbremse bekannt. Hierzu ist ein Zylinder mit einem Stellelement vorgesehen, der die mit einem Reibbelag versehene Kupplungspfanne auf das Sensorsignal stärker oder schwächer an die Kupplungskugel preßt.

Der Erfindung liegt damit die Aufgabe zugrunde, eine Kugelkopf-Anhängerkupplung mit einer Reibbremse aufzuzeigen, die einen höheren Bedienungskomfort und eine genauere und bessere Einstellung bietet.

Die Erfindung löst diese Aufgabe mit den Merkmalen im Kennzeichenteil des Hauptanspruches.

Die erfindungsgemäße Reibbremse weist drei oder mehr federbelastete Reibstößel auf, wobei eines der beiden in Fahrtrichtung liegenden Reibelemente als Reibstößel ausgebildet ist und mittels einer Andruckfeder gegen die Kupplungskugel gepreßt wird. Über die Andruckfeder läßt sich eine definierte Anpreßkraft und damit ein bestimmtes Reibmoment einstellen.

In bedienungstechnischer Hinsicht ist es von großem Vorteil, daß zum Schließen dieser Reibbremse keine zusätzlichen Betätigungsorgane, wie ein Ziehkeil oder dgl. erforderlich sind. Vielmehr wird die Reibbremse durch die Kupplungsmechanik betätigt und damit beim An- und Abkuppeln automatisch geschlossen und geöffnet. Über die Andruckfeder, deren Federcharakteristik den Anforderungen entsprechend beliebig wählbar ist, wird zugleich die Reibkraft, wie gesagt, selbsttätig eingestellt. Die Feder gleicht auch Verschleiß der Reibbeläge aus, so daß die erforderliche Reibkraft im wesentlichen konstant bleibt.

Die erfindungsgemäße Reibbremse besitzt seitliche Reibstößel mit Federn und einer Stellvorrichtung. Für deren Ausbildung und Betätigung gibt es unterschiedliche Möglichkeiten, beispielsweise auch gemäß der Lehre der EP 171 586. In der Beschreibung ist hierzu ein bevorzugtes Ausführungsbeispiel angegeben, das mit einfacheren und praktischeren Bedienelementen auskommt.

Bei der erfindungsgemäßen Reibbremse mit vier Reibelementen sind nun erfindungsgemäß alle Reibungsstößel bzw. Paarungen von Reibungsstößeln über Federkraft einstellbar. Dies hat den Vorteil, daß die gesetzlich zulässigen Dämpfmomente um die drei Achsen an der Kupplungskugel voll ausgenutzt werden können. Um die vertikale Achse durch den Kugelkopf ist nämlich ein Dämpfmoment von 350 Nm zulässig, während um die beiden in Fahrtrichtung und quer dazu verlaufenden Horizontalachsen jeweils nur ein Dämpfmoment von 250 Nm zulässig ist. Die erfindungsgemäße Reibbremse erlaubt damit die volle Ausnutzung der 350 Nm um die vertikale Achse ohne daß zugleich die zulässigen Dämpfmomente um die beiden anderen Achsen überschritten werden. Bei der Auslegung der Anpreßkräfte kann nun auch bis knapp an diese Grenzwerte gegangen werden, da durch die Federn und die automatische Einstellung Bedienungsfehler weitestgehend ausgeschlossen sind. Ein weiterer Vorteil ergibt sich durch den Umstand, daß mit vier Reibelementen kaum mehr ein metallischer Kontakt zwischen der Kupplungskalotte und dem Kugelkopf besteht und damit die Gefahr eines Festfressens bei Trockenlauf vermindert ist.

Von den beiden in Fahrtrichtung liegenden Reibelementen ist in der bevorzugten Ausführungsform nur eines als federbelasteter Reibstößel ausgebildet. In Abwandlung können es aber auch beide sein. Für die konstruktive Ausgestaltung gibt es verschiedene Möglichkeiten. Zum einen kann anstelle der Kalottenauskleidung im vorderen Bereich des Kupplungsgehäuses als Reibstößel ein federbelasteter Bolzen mit einem Reibbelag angeordnet sein. Die Kupplungsschale als zweites Reibelement ist dann vorzugsweise ohne Andruckfeder ausgeführt und weist nur einen im Betrieb ortsfesten Belagträger mit einem Reibbelag auf. Für eine Verschleißkompensation kann allerdings dieser Belagträger über eine Stellschraube nachgestellt werden. Der vordere Reibstößel ist vorzugsweise in horizontaler Lage angeordnet und dient zugleich als Einrastanzeige. Ist die Kupplung korrekt eingerastet und außerdem geschlossen, tritt nämlich der Stößelkopf über das Kupplungsgehäuse nach außen vor und signalisiert eine ordnungsgemäße Kupplungsstellung. Zur Verdeutlichung des Signals kann der Stößelkopf Markierungsflächen an der Stirnseite und/oder am Schaft tragen. Die horizontale Stößellage hat hierbei den Vorteil, daß der Reibstößel mit Sicherheit nur in korrekter Kupplungsstellung nach außen tritt. Er ist insoweit auch von der Stützkraft der Anhängerdeichsel unabhängig.

In einer zweiten Ausführungsvariante ist im vorderen Gehäusebereich die Kupplungskalotte mit einem Reibbelag ausgekleidet, bzw. mit einem im wesentlichen ortsfesten Belagträger versehen, während auf der anderen Seite die Kupplungsschale als federbelasteter Reibstößel ausgebildet ist. Sie besitzt hierzu zwei bewegliche Schalenteile, von denen eines als Reibelement ausgebildet ist, während das andere Schalenteil eine Druckfläche aufweist und von der Kupplungsmechanik beaufschlagt wird. Die Kupplungsmechanik drückt beim Ankuppeln und im Betrieb dann auf das hintere Schalenteil, das über die gespannte Andruckfeder dann das vordere Schalenteil gegen den Kugelkopf preßt. Diese Ausführungsform hat im weiteren den Vorteil, daß sich die Kupplungsmechanik vereinfacht, da der Kupplungsgriff über einen Ansatz direkt auf die Druckfläche des hinteren Schalenteils einwirken kann. Wie im erstgenannten Ausführungsbeispiel können auch hier beide Reibelemente mit nachstellbaren Belagträgern versehen sein.

Die Erfindung ist in den Zeichnungen beispielsweise und schematisch dargestellt. Im einzelnen zeigen:

Fig. 1: eine Kugelkopf-Anhängerkupplung mit einem vornliegenden Reibungsstößel in Seitenansicht,

Fig. 2 und 3: eine Kugelkopf-Anhängerkupplung in Variation zu Figur 1 mit einem hinteren Reibungsstößel in Seiten- und Stirnansicht,

Fig. 4 und 5: den hinteren Reibungsstößel in Seitenansicht und Draufsicht,

Fig. 6 und 7: das vordere Schalenteil der Kupplungsschale in Seiten- und Stirnansicht,

Fig. 8 und 9: das hintere Schalenteil in Seiten- und Stirnansicht und

Fig. 10: eine Reibbremse mit vier Reibelementen in teilweise durchscheinender perspektivischer Darstellung.

In den verschiedenen Ausführungsbeispielen ist jeweils eine Kugelkopf-Anhängerkupplung (1) für Fahrzeuganhänger, insbesondere Anhänger mit starrer Deichsel und ein oder zwei Achsen, dargestellt. Der Übersichtlichkeit halber ist von der Kugelkopf-Anhängerkupplung nur das Kupplungsgehäuse (3) gezeigt. Auch der zum Zugfahrzeug gehörige Kugelkopf (2) ist nur abgebrochen dargestellt.

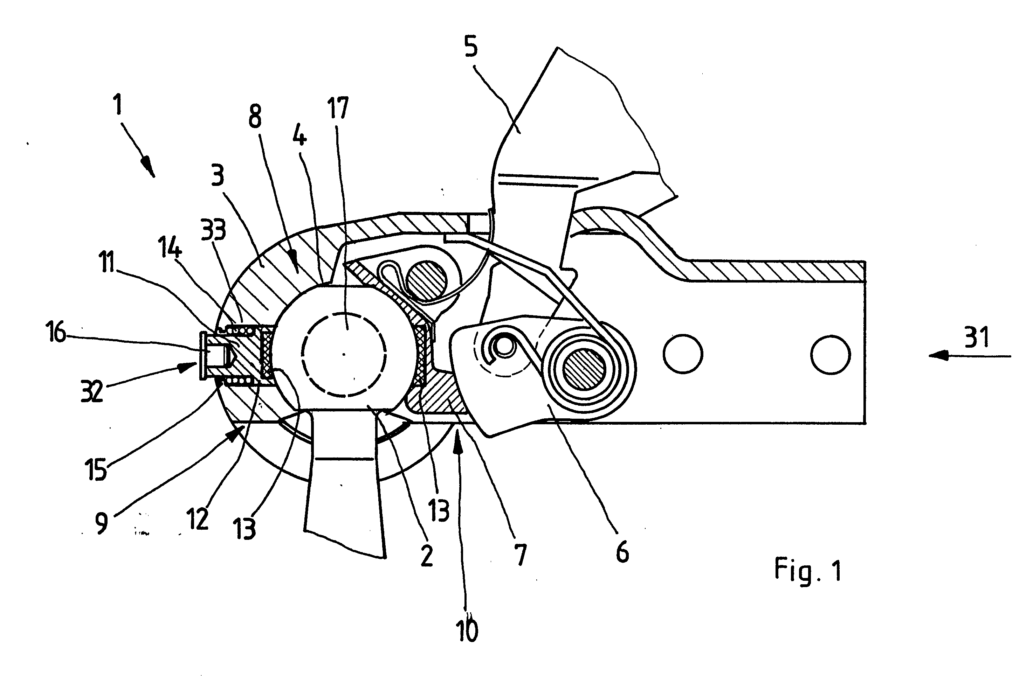

Im Nachfolgenden beziehen sich alle Angaben über vorn und hinten auf die Fahrtrichtung (31) des Anhängers im normalen Fahrbetrieb (vgl. Fig. 1).

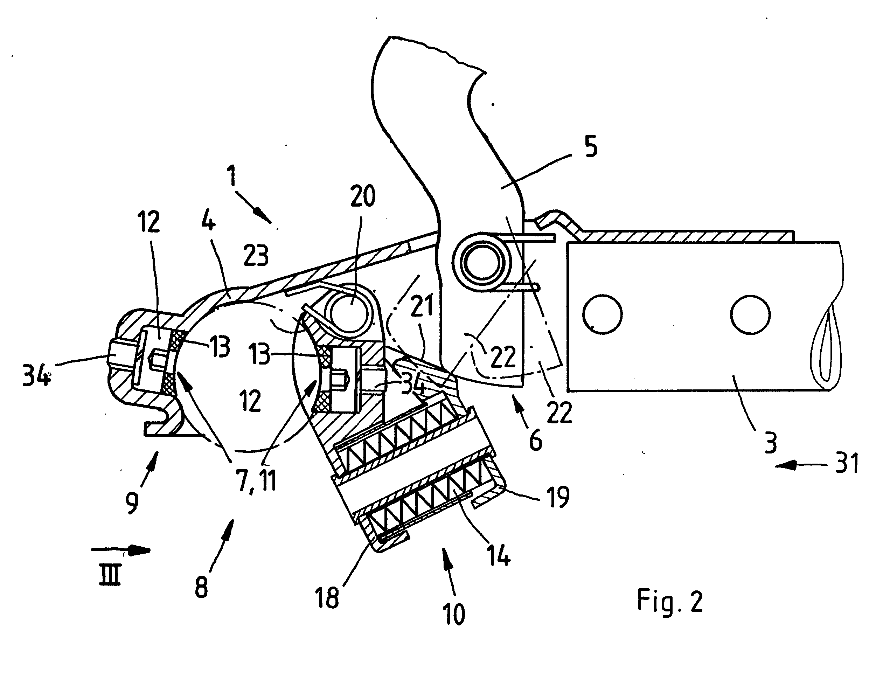

Die Kugelkopf-Anhängerkupplung (1) besitzt einen Kupplungsgriff (5), der über eine Kupplungsmechanik (6) die Kupplungsschale (7) gegen den Kugelkopf (2) andrückt oder löst. Die Kupplungsmechanik (6) kann unterschiedlich ausgebildet sein und beispielsweise gemäß Figur 1 einen federbelasteten Schwenknocken aufweisen, der über eine Drehfeder in Totpunktstellungen zum Öffnen und Schließen arretierbar ist. Im Ausführungsbeispiel der Figur 2 hingegen besteht die Kupplungsmechanik (6) aus einer Rückstellfeder und einem am Kupplungsgriff (5) direkt befindlichen Ansatz (22). Um den Kugelkopf (2) im angekoppelten Zustand dicht zu umschließen, ist im Kupplungsgehäuse (3) eine der Kugelkontur entsprechende Kalotte (4) ausgeformt.

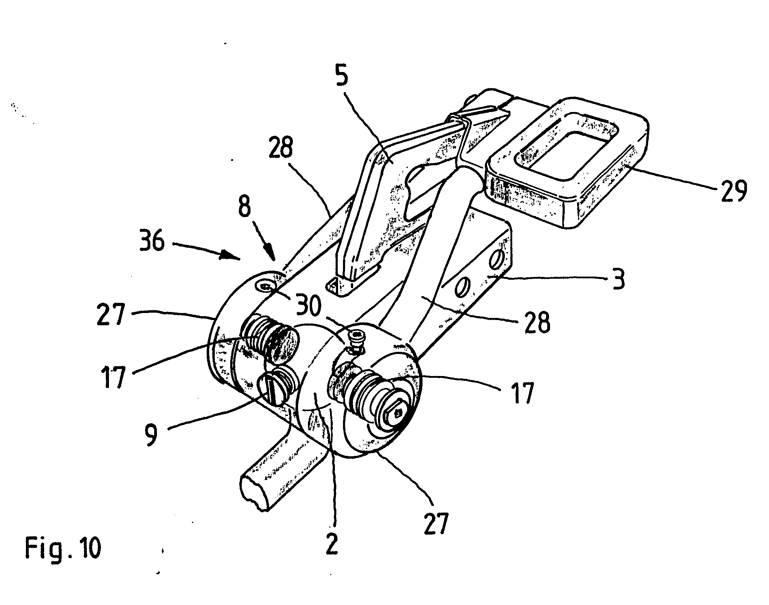

Die Kugelkopf-Anhängerkupplung (1) beinhaltet eine Reibbremse (8), die vom Anhänger über das Kupplungsgehäuse (3) eingeleitete Schwingungen um den Kugelkopf (2) dämpft. Die Reibbremse (8) besteht aus vier Reibelementen. Zwei Reibelemente (9,10) sind in Fahrtrichtung einander gegenüberliegend angeordnet. Diese pressen bei eingerasteter Kupplung von vorn und hinten auf den Kugelkopf (2). Ferner weist die Reibbremse (8) auch noch seitliche Reibelemente (17) auf, wie sie in Figur 1 angedeutet und in Figur 10 näher dargestellt sind.

Nachfolgend werden die in Fahrtrichtung (31) gelegenen Reibelemente (9,10) näher erläutert.

Im Ausführungsbeispiel der Figur 1 ist das vordere Reibelement (9) als federbelasteter und beweglicher Reibstößel (11) ausgebildet, während die Kupplungsschale (7) als hinteres Reibelement (10) nur einen Reibbelag (13) trägt. Im Ausführungsbeispiel der Figur 2 hingegen ist das hintere Reibelement (10), also die Kupplungsschale (7), als federbelasteter Reibstößel (11) ausgebildet. Das vordere Reibelement (9) besteht in diesem Fall aus einem im Betrieb ortsfesten Belagträger (12) mit einem Reibbelag (13). Alternativ kann auch die Kupplungskalotte (4) mit einem Reibbelag ausgekleidet sein.

Im Ausführungsbeispiel der Figur 1 besteht der Reibstößel (11) aus einem Bolzen, der am unteren Rand des Kupplungsgehäuses (3) in horizontaler Lage angeordnet ist und sich längs der Fahrtrichtung (31) erstreckt. Der Bolzen (11) besitzt einen eingezogenen Schaft, auf den eine Andruckfeder (14) aufgezogen ist. Der Reibstößel (11) ist in einer Gehäusebohrung (33) längsbeweglich gelagert. Diese hat am vorderen Rand einen nach innen vorspringenden ringförmigen Ansatz (15), an dem sich die Andruckfeder (14) abstützt. Am anderen Ende drückt die Feder (14) auf einen Belagträger (12) mit einem Reibbelag (13). Im ausgekuppelten Zustand ragt der Reibstößel (11) mit dem Belagträger (12) in das Innere der Kalottenöffnung. Beim Aufsetzen der Kupplung und Schließen der Kupplungsmechanik (6) wird er vom Kugelkopf (2) zurückgedrängt, wobei die Andruckfeder (14) gespannt wird und die erforderliche Reibkraft entwickelt. Die Andruckfeder (14) kann vorgespannt sein. Zu diesem Zweck stützt sich auch der vornliegende Stößelkopf (16) mit seinem breiteren Durchmesser am Ansatz (15) ab.

Der Belagträger (12) ist in den Bolzen des Reibungsstößels (11) mittels eines Gewindestiftes eingeschraubt. Dies ermöglicht einerseits eine werkseitige exakte Einstellung der Reibkraft und andererseits einen Verschleißausgleich des Reibbelages (13) durch Herausschrauben des Belagträgers (12). Der Belagträger (12) kann gegen unbeabsichtigtes Verdrehen im Betrieb gesichert sein. Um eine größere Nachstellbarkeit zu schaffen ohne zugleich die Federkraft zu beeinträchtigen, kann die Andruckfeder (14) sich auch an einem stößelfesten Ansatz abstützen und nicht direkt am Belagträger (12).

Der Stößelkopf (16) trägt an seiner Stirnfläche und/oder an seinem angrenzenden Schaft Markierungsflächen (32), die die Stößelstellung optisch besser verdeutlichen. Im bevorzugten Ausführungsbeispiel ist die Stirnfläche rot gehalten und der benachbarte Schaftbereich zeigt eine grüne Farbe. Solange die Kupplung (1) nicht korrekt auf dem Kugelkopf (2) eingerastet ist, befindet sich der Reibstößel (11) bzw. der Stößelkopf (16) mit seinem Schaft noch im Bereich der Gehäusebohrung (33), so daß nur die rote Stirnfläche sichtbar ist. Dies signalisiert eine offene Kupplungsstellung. Erst wenn die Kupplung (1) korrekt eingerastet und außerdem geschlossen ist, tritt der Stößelkopf (16) nach außen über den Gehäuserand vor. Am grünen Schaft ist dann die korrekte Raststellung erkennbar.

Im Ausführungsbeispiel der Figur 1 ist die Kupplungsschale (7) mit einem eingelassenen Reibbelag (13) zu sehen. Sie kann aber ebenfalls einen nachstellbaren Belagträger (12) aufweisen. Die Kupplungsschale (7) ist schwenkbar gelagert und wird vom Kupplungsgriff über einen Schwenknocken in die Schließstellung gedreht.

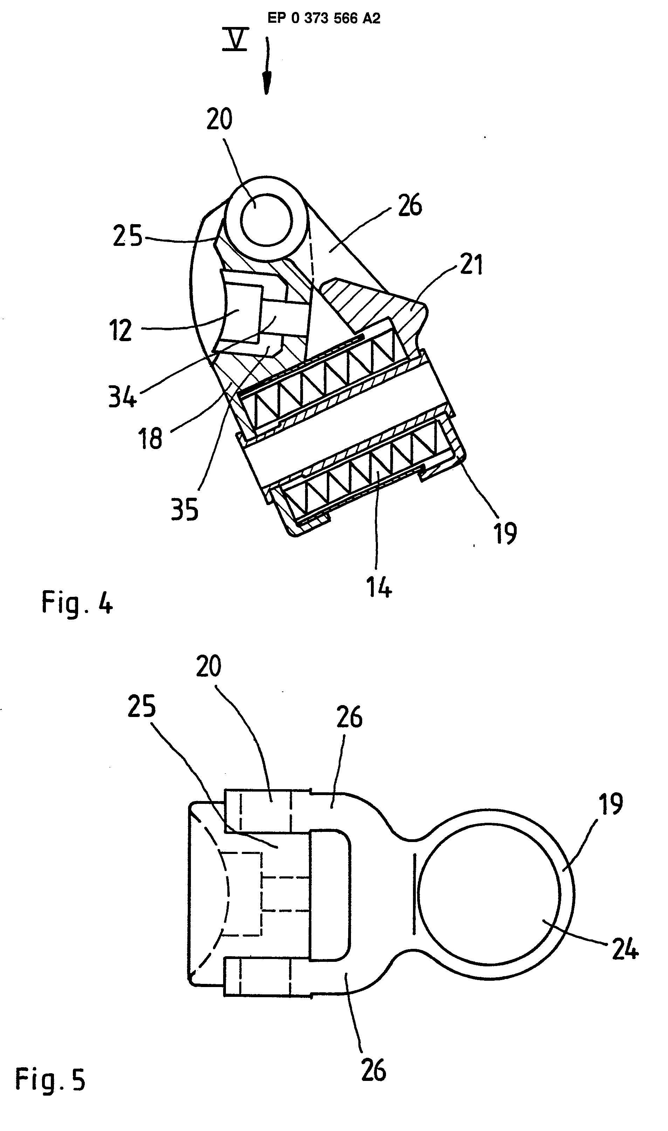

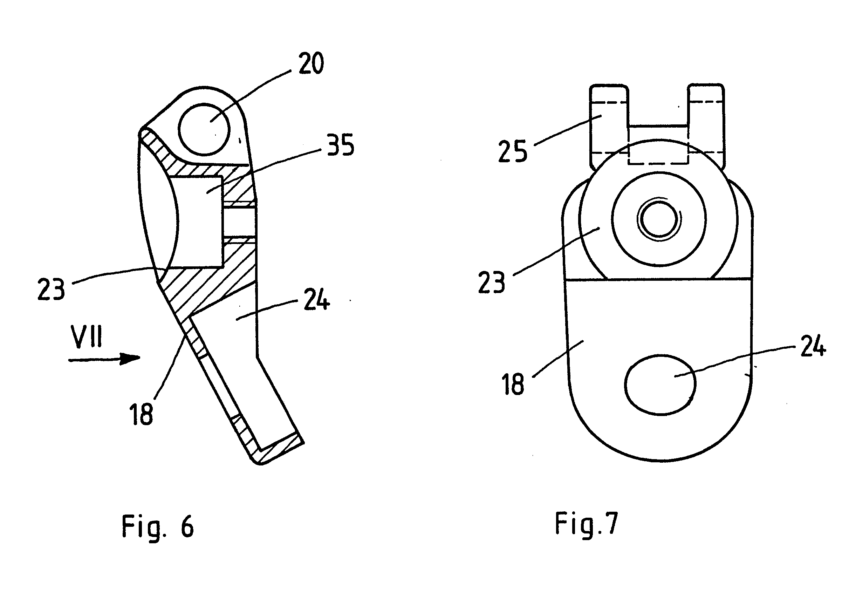

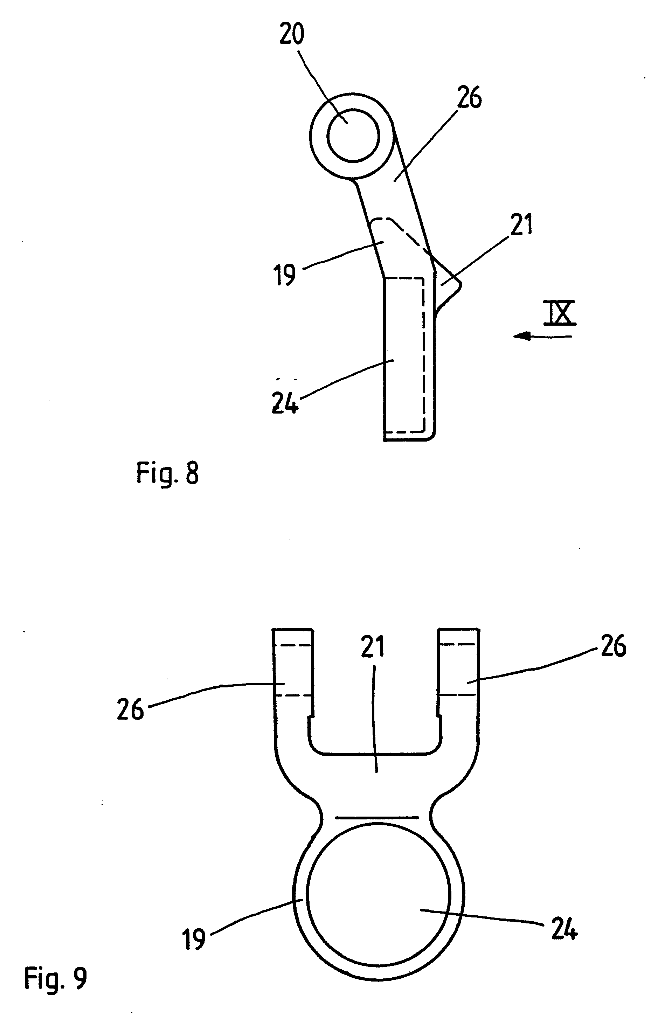

Im Ausführungsbeispiel der Figuren 2 bis 9 ist hingegen die Kupplungsschale (7) als Reibstößel (11) ausgebildet. Sie besteht aus zwei Schalenteilen (18,19), die über eine gemeinsame Achse (20) schwenkbar miteinander verbunden sind. Das vordere Schalenteil (18) bildet das Reibelement (10), in dem es eine der Kugelform nachgebildete Ausnehmung (23) mit einem entsprechend geformten Reibbelag (13) aufweist. Die beiden Schalenteile (18,19) sind über eine Andruckfeder (14), hier ein Tellerfederpaket, miteinander verbunden und werden über eine Schraubhülse, eine Klammer oder dgl. zusammengehalten. Das hintere Schalenteil (19) besitzt eine schräge Druckfläche (21), auf der der Kupplungsgriff (5) mit einem Ansatz (22) beim Schließen aufgleitet und beide Schalenteile (18,19) unter Spannung der Feder (14) nach vorn um das Gelenk (20) verschwenkt. Für die Rückstellung bei Entlastung sorgt eine Drehfeder.

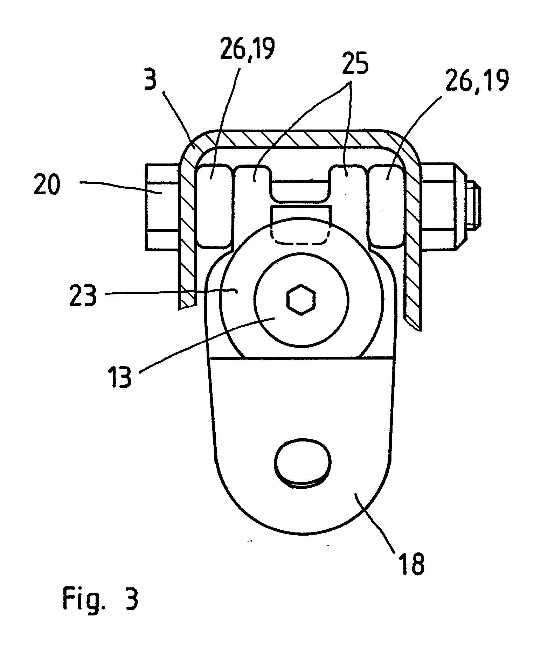

Wie die Figuren 3 bis 9 verdeutlichen, besitzt das vordere Schalenteil (18) eine Aufnahmebohrung (35) mit einer Gewindebohrung für den Belagträger (12) und seine Stellschraube (34). Der Reibbelag (13) kann seinerseits auf den Belagträger (12) aufgeklebt oder mittels einer Fassung und eines Gewindestiftes eingeschraubt sein. Die Stellschraube (34) kann von außen über einen Imbusschlüssel zur Verstellung des Belagträgers (12) verdreht werden.

Eine gleichartige Anordnung findet sich auch an der vorderen Gehäuseseite. Hier ist ebenfalls ein Belagträger (12) in einer Gehäuseausbuchtung längsbeweglich gelagert und kann über eine Stellschraube (34) von außen reguliert werden. Eine derartige Belagträgerkonstruktion kann auch in Abwandlung des Ausführungsbeispiels der Figur 1 in der Kupplungsschale (7) vorgesehen sein.

Im Ausführungsbeispiel der Figuren 2 bis 9 besitzen beide Schalenteile (18,19) im unteren Teil eine Aufnahmeöffnung (24) für das Federpaket (14). Deren Winkellage ist so getroffen, daß bei geschlossener Kupplung gemäß Figur 2 die Andruckfeder (14) ungefähr in einem Winkel von 25° gegen die Horizontale in Fahrtrichtung (31) abwärts geneigt ist.

Das Schalenteil (18) weist am oberen Ende einen geteilten Lagerarm (25) auf, zwischen dessen Enden die Rückstellfeder (vgl. Figur 2) Platz findet. Das hintere Schalenteil (19) besitzt hingegen eine Lagergabel (26), die den Lagerarm (25) in Montagestellung außenseitig umgreift und an den Seitenwänden des Kupplungsgehäuses (3) mit ausreichend Spiel für Drehbeweglichkeit anliegt (vgl. Figur 3). Damit können die beiden Schalenteile (18,19) sich relativ zueinander im Rahmen des Federspannweges bewegen. Die beiden Schalenteile (18,19) sind hierzu auch entsprechend gekröpft. Die Lagergabel (26) geht im unteren Bereich in die schräge Druckfläche (21) über.

Figur 10 zeigt die Reibbremse (8) mit ihren vier Reibelementen (9,10,17). Die beiden in Fahrtrichtung liegenden Reibelemente (9,10) entsprechen hier der Ausführungsform von Figur 1, wobei wiederum der vordere Reibstößel (11) als Einrastanzeige fungiert. Die beiden seitlichen Reibstößel (17) sind ähnlich wie der Reibstößel (11) von Figur 1 aufgebaut und bestehen aus einer Hülse mit einem aufgezogenen Federpaket und eingeschraubtem Belagträger. Die Betätigungsvorrichtung (36) besteht in diesem Ausführungsbeispiel aus zwei seitlichen Deckeln (27), die um eine horizontale Querachse drehbar auf seitlichen Gehäuseansätzen gelagert sind und sich in Bedienhebel (28) fortsetzen. Diese münden in ein gemeinsames Griffteil (29) mit einer Abdeckhaube für den Kupplungsgriff (5). Die Deckel (27) weisen mehrere radial nach innen vorstehende Führungsstifte auf, die in einer an den Gehäuseansätzen befindlichen Bajonettführung gelagert sind. Die Bajonettführungen (30) besitzen eine nach innen gerichtete Bahn, so daß bei einer Drehbewegung um die horizontale Querachse die Deckel (27) beim Schließen entlang dieser Achse aufeinander zu und beim Öffnen voneinander weg bewegt werden. Die Deckel (27) drücken hierbei über Ringansätze auf die Federn der Reibstößel (17) und pressen diese bei der nach innen gerichteten Schließbewegung gegen den Kugelkopf (2). Figur 10 verdeutlicht diese Schließstellung. Beim Öffnen werden hingegen die Deckel (27) auseinanderbewegt und nehmen die Reibstößel (17) wieder mit zurück. Die horizontalen Reibstößel (17) bewegen sich dabei in einer Durchgangsbohrung der seitlichen Gehäuseansätze.

Alternativ können die seitlichen Reibstößel (17) auch entsprechend der EP 171 586 ausgebildet sein. Sie sind dann frei schwimmend in seitlichen Gehäusebohrungen gelagert und werden außenseitig von den schwenkbaren Armen einer federbelasteten Spannzange beaufschlagt.

Bei der Reibbremse gemäß Figur 10 mit vier Reibelementen (9,10,17) werden die beiden seitlichen Reibstößel (17) über die Federdimensionierung und in Abhängigkeit vom Reibwert so eingestellt, daß sie ein Dämpfmoment um die durch den Kugelkopf (2) verlaufende Vertikalachse von 250 Nm erzeugen. Die Feder des in Längsrichtung liegenden Reibstößels (11) wird dann auf ein Dämpfmoment von 100 Nm um die gleiche vertikale Achse eingestellt. Insgesamt ergeben sich damit Dämpfmomente von 350 Nm um die vertikale Achse, 250 Nm um die in Fahrtrichtung (31) verlaufende Horizontalachse und 100 Nm um die quer dazu verlaufende zweite Horizontalachse.

In Abwandlung der gezeigten Ausführungsbeispiele kann auch in Figur 2 im vorderen Bereich ein Reibstößel angeordnet sein. Dieser kann in weiterer Variation auch nur als Einrastanzeige fungieren und besitzt dann eine entsprechend schwache Druckfeder. Seine Konstruktion entspricht insoweit der Ausführungsform der Figur 1. Weitere Abwandlungen sind auch hinsichtlich der Kupplungsmechanik (6) sowie der Ausbildung der Reibstößel (11) möglich. Die Kupplungsschale (7) kann beispielsweise auch aus einem geradgeführten und federbelasteten Bolzen bestehen, der von einer entsprechend gestalteten Kupplungsmechanik beaufschlagt wird. Es ist im weiteren auch möglich, die Kupplungsschale als einteiliges Schwenkteil auszubilden und die Andruckfeder auf den Belagträger einwirken zu lassen.

## STÜCKLISTE

1 Kugelkopf-Anhängerkupplung
2 Kugelkopf
3 Kupplungsgehäuse
4 Kupplungskalotte
5 Kupplungsgriff
6 Kupplungsmechanik
7 Kupplungsschale
8 Reibbremse
9 Reibelement
10 Reibelement
11 Reibstößel
12 Belagträger
13 Reibbelag
14 Andruckfeder
15 Ansatz
16 Stößelkopf
17 Reibelement, Reibstößel, seitlich
18 Schalenteil
19 Schalenteil
20 Gelenk, Achse
21 Druckfläche
22 Ansatz
23 Ausnehmung
24 Aufnahme
25 Lagerarm
26 Lagergabel
27 Deckel
28 Bedienhebel
29 Griff
30 Bajonett-Führung
31 Fahrtrichtung
32 Markierungsfläche
33 Gehäusebohrung
34 Stellschraube, Gewindestift
35 Aufnahmebohrung
36 Betätigungsvorrichtung

**Ansprüche**

1.) Kugelkopf-Anhängerkupplung für Fahrzeuganhänger mit einer Reibbremse (8), die zwei seitliche Reibstößel (17) und zwei in Fahrtrichtung angeordnete Reibelemente (9,10) aufweist, wobei die Reibstößel (17) in Betriebsstellung mit Federn und einer Betätigungsvorrichtung (36) von beiden Seiten quer zur Fahrtrichtung (31) an den Kugelkopf (2) gepreßt und zum Abkuppeln abgerückt werden und wobei von den Reibelementen (9,10) zumindest eines beweglich gelagert sowie als Teil der Kupplungsschale (7) ausgebildet ist, dadurch **gekennzeichnet**, daß die Reibbremse (8) drei oder mehr Reibstößel (11,17) aufweist, wobei zumindest eines der beiden in Fahrtrichtung (31) liegenden Reibelemente (9,10) als Reibstößel (11) mit einer Andruckfeder (14) ausgebildet ist.

2.) Kugelkopf-Anhängerkupplung nach Anspruch 1, dadurch **gekennzeichnet**, daß das in in Fahrtrichtung (31) vordere Reibelement (9) als federbelasteter Reibstößel (11) ausgebildet ist, der in horizontaler Lage angeordnet und im Kupplungsgehäuse (3) längsbeweglich geführt ist.

3.) Kugelkopf-Anhängerkupplung nach Anspruch 1, dadurch **gekennzeichnet**, daß die Kupplungsschale (7) als federbelasteter Reibstößel (11) ausgebildet ist und zwei bewegliche Schalenteile (18,19) aufweist, zwischen denen die Andruckfeder (14) angeordnet ist.

4.) Kugelkopf-Anhängerkupplung nach Anspruch 2, dadurch **gekennzeichnet**, daß der Reibstößel (11) einen Stößelkopf (16) aufweist, der außenseitig aus dem Kupplungsgehäuse (3) ragt und Markierungsflächen (32) an der Stirnseite und/oder am Schaft aufweist.

5.) Kugelkopf-Anhängerkupplung nach Anspruch 3, dadurch **gekennzeichnet**, daß die beiden Schalenteile (18,19) an einer gemeinsamen Achse (20) schwenkbar gelagert sind, wobei der vordere Schalenteil (18) eine der Kupplungskugel (2) nachgeformte Ausnehmung (23) mit dem Reibbelag (13) aufweist und der hintere Schalenteil (19) eine Druckfläche (21) für die Kupplungsmechanik (6) besitzt.

6.) Kugelkopf-Anhängerkupplung nach Anspruch 1 oder einem der folgenden, dadurch **gekennzeichnet**, daß die Reibelemente (9,10) einen Belagträger (12) mit einer Stellschraube (33) aufweisen.

Fig. 1

Fig. 2

Fig. 3

Fig. 4

Fig. 5

Fig. 6

Fig. 7

EP 0 373 566 A2

Fig. 8

Fig. 9

Fig. 10

EP 0 373 566 A2